# EUROPÄISCHE PATENTSCHRIFT

(11) **EP 2 303 621 B1**
(45) Veröffentlichungstag und Bekanntmachung des Hinweises auf die Patenterteilung: **30.05.2012**
(21) Anmeldenummer: 09768893.1
(22) Anmeldetag: 30.05.2009
(51) Int. Cl.: B60J 7/14, B60J 10/10

(54) **DACHMODUL FÜR EIN FAHRZEUGDACH, INSBESONDERE EIN KLAPPVERDECK, EINES PERSONENKRAFTWAGENS**
ROOF MODULE FOR A VEHICLE ROOF, PARTICULARLY A FOLDING TOP, OF A PASSENGER CAR
MODULE DE TOIT POUR UN TOIT DE VÉHICULE, NOTAMMENT TOIT DÉCAPOTABLE, DE UN VÉHICULE DE TOURISME

(30) Priorität: 24.06.2008 DE 102008029703
(43) Veröffentlichungstag der Anmeldung: 06.04.2011
(73) Patentinhaber: Daimler AG, 70327 Stuttgart (DE)
(72) Erfinder: GUCKEL, Martin, 75242 Neuhausen (DE); HEIDT, Erich, 71272 Renningen (DE); SCHRADER, Jürgen, 71093 Weil im Schönbuch (DE); ZYGAN, Andreas, 76316 Malsch (DE)
(74) Vertreter: JENSEN & SON
(86) Internationale Anmeldenummer: PCT/EP2009/003903
(87) Internationale Veröffentlichungsnummer: WO 2009/156044

(56) Entgegenhaltungen:
- EP-A- 1 897 733
- WO-A-01/94141
- WO-A-2004/045879

## Beschreibung

Die Erfindung betrifft ein Dachmodul für ein Fahrzeugdach, insbesondere ein Klappverdeck, eines Personenkraftwagens der im Oberbegriff des Patentanspruchs 1 angegebenen Art.

Ein solches Dachmodul ist beispielsweise bereits aus der DE 102 54 370 B3 (Prioritätsdokument von WO 2004/045879 A) als bekannt zu entnehmen und umfasst einen Grundträger in Form eines Grundrahmens, durch welchen ein Dachbeplankungsteil getragen ist, an dessen seitliche Randbereiche sich jeweilige Verkleidungsteile anschließen. Die Verkleidungsteile werden dabei über jeweilige Rastverbindungen am Grundträger befestigt.

Die EP 1897733 A1 zeigt ein öffnungsfähiges Dach für ein Cabriolet, das mehrere in Fahrtrichtung hintereinander angeordnete Dachabschnitte aufweist, wobei zumindest ein Dachabschnitt als rahmenartiger Modulträger ausgebildet ist, an dem unterschiedliche Dachmodule angebracht werden können.

Aufgabe der vorliegenden Erfindung ist es, ein Dachmodul der eingangs genannten Art zu schaffen, welches auf verbesserte Weise in eine korrespondierende Öffnung eingefügt bzw. mit angrenzenden Bauteilen verbunden werden kann.

Diese Aufgabe wird erfindungsgemäß durch ein Dachmodul mit den Merkmalen des Patentanspruchs 1 gelöst. Vorteilhafte Ausgestaltungen mit zweckmäßigen und nichttrivialen Weiterbildungen der Erfindung sind in den übrigen Patentansprüchen angegeben.

Um ein Dachmodul für ein Fahrzeugdach zu schaffen, welches auf besonders günstige Weise in eine hierfür vorgesehene Öffnung eingefügt oder mit angrenzenden Bauteilen verbunden werden kann, sind erfindungsgemäß die Randbereiche des Dachbeplankungsteils zumindest über eine Teillänge mit einer Umrandung versehen. Diese Umrandung kann insbesondere als Kunststoffumspritzung ausgebildet sein, da dieses Verfahren besonders prozesssicher und genau ist.

Im Ergebnis wird durch das Versehen der Randbereiche des Dachbeplankungsteils mit der Umrandung auf einfache Weise ein Ausgleich von Toleranzen erreicht, welche dadurch entstehen, dass das Dachmodul aus einer Mehrzahl von Einzelteilen zusammengesetzt wird. Somit ist auf einfache Weise ein modularer Aufbau des Dachmoduls möglich, wobei beispielsweise unterschiedliche Dachbeplankungsteile aus undurchsichtigem oder durchsichtigem Material, in Wagenfarbe oder transparent oder dergleichen eingesetzt werden können. An den äußeren Schnittstellen des Dachmoduls entstehen somit geringst mögliche Gesamttoleranzen.

Ein weiterer Vorteil besteht darin, dass durch das Vorhandensein der Umrandung weitere Bauteilfunktionen, beispielsweise Dichtfunktionen, Verkleidungsfunktionen oder Haltefunktionen, integriert werden können.

Als weiterhin vorteilhaft hat es sich gezeigt, wenn die Umrandung bzw. Kunststoffumspritzung vollständig um das Dachbeplankungsteil umlaufend ausgebildet ist. Somit ist nach allen Seiten des Dachmoduls hin ein Ausgleich der Bauteil- bzw. Fertigungstoleranzen möglich.

Als weiterhin vorteilhaft hat es sich gezeigt, wenn die Umrandung bzw. Kunststoffumspritzung sich zumindest annähernd bis zur Oberseite des Dachbeplankungsteils erstreckt, und insbesondere flächenbündig mit der Oberseite des Dachbeplankungsteils endet. Hierdurch ist auch nach oben hin eine flächenbündige und formschöne Integration des Dachbeplankungsteils in die umgebende Umrandung möglich.

Zudem vorteilhaft ist es, wenn die Umrandung bzw. Kunststoffumspritzung zwischen den seitlichen Randbereichen und dem zugeordneten seitlichen Verkleidungsteilen verläuft. Somit kann das jeweils zugeordnete seitliche Verkleidungsteil besonders einfach und genau am Dachmodul bzw. am Dachbeplankungsteil befestigt werden.

Die Umrandung bzw. Kunststoffumspritzung am vorderen und hinteren Randbereich des Dachbeplankungsteils ist in weiterer Ausgestaltung der Erfindung als Dichtungsanlagefläche ausgebildet, welche im montierten Zustand zustand mit jeweils korrespondierenden Dichtungselementen zusammen wirken. Durch die äußerst genaue Ausgestaltung der Umrandung kann somit eine äußerst günstige und dichte Abdichtung erreicht werden.

Weiterhin vorteilhaft ist es, wenn die Umrandung Randbereiche des Grundträgers zumindest über eine Teillänge umrahmt. Mit anderen Worten hat es sich als zudem vorteilhaft gezeigt, wenn nicht nur Randbereiche des Dachbeplankungsteils, sondern auch des Grundträgers mit einer entsprechenden Umrandung versehen werden. Somit kann nicht nur das Dachbeplankungsteil, sondern eben auch der Grundträger mittels der Umrandung umrahmt werden. Zudem ist es hierdurch möglich, unter Vermittlung der Umrandung bzw. der Kunststoffumspritzung das Dachbeplankungsteil mit dem Grundträger zu verbinden.

Die Randbereiche des Dachbeplankungsteils sind in weiterer Ausgestaltung der Erfindung über Kleberverbindungen mit dem Grundträger verbunden. Hierdurch ergibt sich eine besonders günstige Anbindung des Dachbeplankungsteils an dem Grundträger.

In weiterer Ausgestaltung der Erfindung sind auch die Verkleidungsteile über Klebverbindungen mit dem Grundträger verbunden. Hierdurch ergibt sich auch in diesem Fall eine besonders günstige und feste Anbindung der Verkleidungsteile an dem Grundträger. Die Klebeverbindung kann dabei sowohl über einen zusätzlichen Kleber als auch über entsprechende Eigenschaften der Kunststoffumspritzung erfolgen.

Schließlich hat es sich als vorteilhaft gezeigt, wenn die Verkleidungsteile mit Aufnahmeprofilen für Dichtungselemente versehen sind, welche beispielsweise für eine Abdichtung gegenüber jeweiligen Seitenscheiben sorgen können. Somit haben die Verkleidungsteile nicht nur die Funktion der seitlichen Abdeckung des Dachmoduls, sondern auch der Aufnahme von jeweiligen Dichtungselementen, beispielsweise für Türdichtungen.

Weitere Vorteile, Merkmale und Einzelheiten der Erfindung ergeben sich aus der nachfolgenden Beschreibung eines bevorzugten Ausführungsbeispiels sowie anhand der Zeichnungen; diese zeigen in:
- Fig. 1: eine schematische Perspektivansicht auf ein Dachmodul für ein Fahrzeugdach, insbesondere für ein Klappverdeck, eines Personenkraftwagens mit einem Grundträger, durch welchen ein im vorliegenden Fall durchsichtiges Dachbeplankungsteil getragen ist, an dessen seitlichen Randbereichen sich jeweilige Kleidungsteile anschließen; und in
- Fig. 2: eine schematische Perspektivansicht sowie drei ausschnittsweise vergrößerte Schnittansichten auf bzw. durch das Dachmodul gemäß Fig. 1.

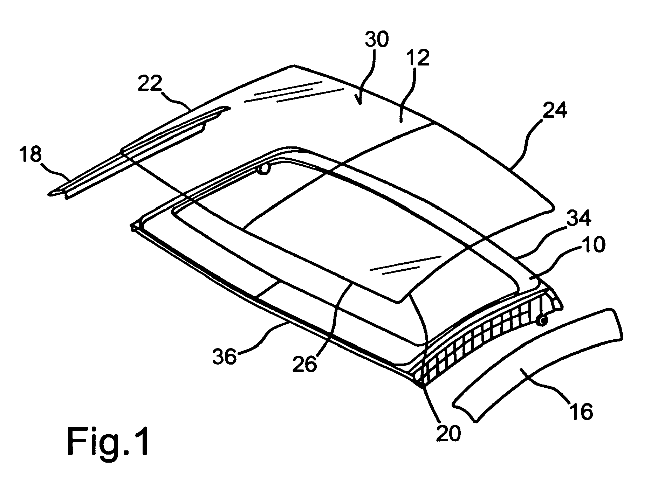

In Fig. 1 ist in einer Perspektivansicht bzw. einer perspektivischen Explosionsansicht ein Dachmodul für ein Fahrzeugdach eines Personenkraftwagens dargestellt. Im vorliegenden Fall ist diese Dachmodul als vorderes bzw. oberes Dachteil eines Klappverdecks für einen offenen Kraftwagen, beispielsweise einen Roadster oder ein Cabriolet, ausgebildet. Derartige Dachteile kommen beispielsweise beim Mercedes-Benz SL (R230) oder beim Mercedes-Benz SLK (R171) zum Einsatz.

Das Dachmodul umfasst dabei im vorliegenden Fall einen Grundträger 10, welcher als umlaufender Rahmen gestaltet ist. Im vorliegenden Ausführungsbeispiel besteht dieser Grundträger aus einer Magnesium-Druckgusslegierung, wobei der Grundträger 10 nach dem Druckgießen in einer kathodischen Tauchlackierung bearbeitet und anschließend pulverbeschichtet worden ist.

Des Weiteren umfasst das Dachmodul ein Dachbeplankungsteil 12, welches im Wesentlichen eine rechteckförmige Grundkontur aufweist und aus verschiedenen Materialien hergestellt werden kann. Im vorliegenden Fall besteht das Dachbeplankungsteil 10 aus Polycarbonat (PC), wobei ein mittlerer Bereich als Durchsichtsbereich und ein umlaufender Randbereich in Wagenfarbe lackiert ist. Mit anderen Worten ist vorliegend das Dachbeplankungsteil 12 als Kunststoff-Scheibe gestaltet, welche in einem zentralen Durchsichtsbereich durchsichtig und in seinen Randbereichen entsprechend undurchsichtig bzw. lackiert ist. Als im Rahmen der Erfindung mitumfasst ist es zu betrachten, dass das Dachmodul aufgrund seiner modularen Bauweise auch aus Dachbeplankungsteilen 12 geschaffen sein kann, welche beispielsweise aus einem Metallblech oder einem Kunststoff gebildet sind, welche entsprechend in Wagenfarbe lackiert sind. Ebenfalls eignet sich hierfür Glas, glasfaserverstärkter Kunststoff (SMC) und andere gängige Materialien.

Zudem umfasst das Dachmodul zwei seitliche Verkleidungsteile 16, 18, welche sich an seitliche Randbereiche 20, 22 des Dachbeplankungsteils 12 auf im Weiteren noch näher dargestellte Weise anschließen. Im vorliegenden Fall ist jedoch erkennbar, dass sich die Verkleidungsteile 16, 18 über die komplette Länge des Dachmoduls 10 bzw. des Dachbeplankungsteils 12 erstrecken.

Die beiden Verkleidungsteile 16, 18 sind im vorliegenden Fall aus einem Kunststoff, beispielsweise ebenfalls aus Polycarbonat (PC), geschaffen und beispielsweise in Wagenfarbe lackiert. Natürlich ist auch hier die Ausgestaltung der Verkleidungsteile 16, 18 beispielsweise aus einem Metallblech oder aus anderen Materialien denkbar.

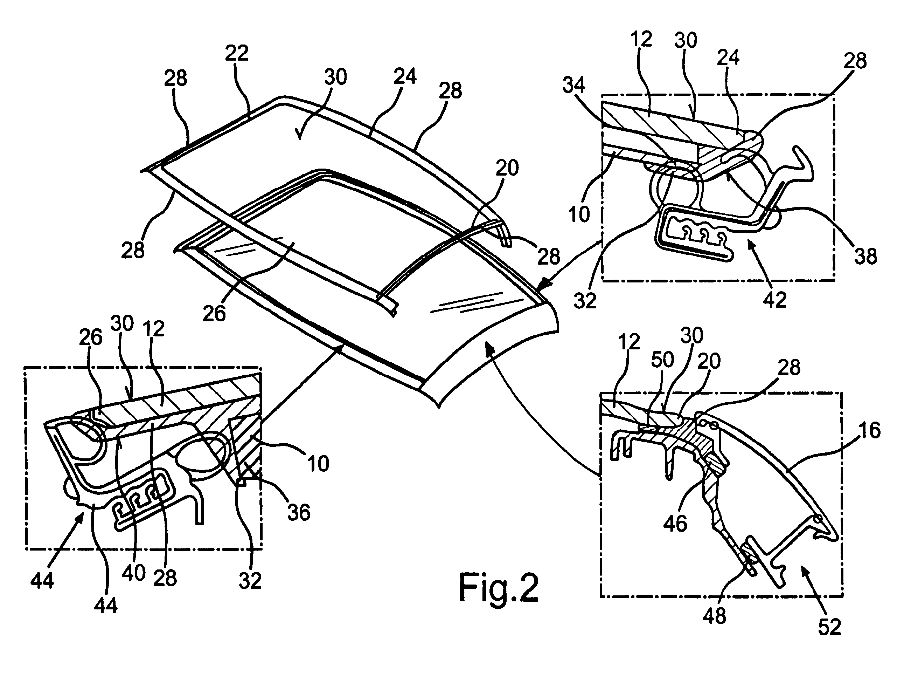

In Fig. 2 ist in einer Perspektivansicht das Dachmodul gemäß Fig. 1 in zusammengebauter Form dargestellt. Zudem ist das Dachbeplankungsteil 12 separat unterhalb dargestellt. Des Weiteren sind in Fig. 2 drei Schnittansichten durch das Dachmodul erkennbar, wobei jeweilige Pfeile auf den Bereich der jeweiligen Schnittansicht durch das Dachmodul deuten.

Zunächst ist aus den drei Schnittansichten erkennbar, dass sowohl die seitlichen Randbereiche 20, 22 wie auch ein vorderer und ein hinterer Randbereich 24, 26 des Dachbeplankungsteils 12 mit einer Umrandung 28 in Form einer Kunststoffumspritzung versehen sind. Diese Kunststoffumspritzung besteht vorliegend aus Polyurethan (PU) und verläuft entlang der Randbereiche 20, 22, 24, 26 umlaufend um das gesamte Dachbeplankungsteil 12. Als im Rahmen der Erfindung mitumfasst ist es jedoch zu betrachten, dass gegebenenfalls auch nur Teillängen der jeweiligen Randbereiche 20, 22, 24, 26 mit einer entsprechenden Umrandung 28 versehen sein können. Ebenfalls als im Rahmen der Erfindung mitumfasst ist es zu betrachten, dass die Umrandung auch auf andere Weise hergestellt sein könnte bzw. aus einem anderen Material bestehen könnte als vorliegend beschrieben.

Des Weiteren ist aus den Schnittansichten erkennbar, dass die Umrandung 28 sich im vorliegenden Fall vollständig bis zur Oberseite 30 des Dachbeplankungsteils 12 nach oben hin erstreckt und flächenbündig mit der Oberseite 30 nach oben hin abschließt. Somit ergibt sich eine rahmenförmige Umrandung des Dachbeplankungsteils 12 durch die Umrandung 28.

Aus der linken unteren bzw. rechten oberen Schnittdarstellung ist des Weiteren erkennbar, dass die Umrandung jeweils einen angespritzten Haltebereich 32 umfasst, der einen korrespondierenden Randbereich 34 bzw. 36 des Grundträgers 10 umgreift. Mit anderen Worten umrahmt die Umrandung 28 nicht nur den vorderen und hinteren Randbereich 24, 26 des Dachbeplankungsteils, sondern eben auch den vorderen und hinteren Randbereich 34, 36 des Grundträgers 10. Demzufolge kann der Grundträger 10 beispielsweise durch Aufschieben mit dem Dachbeplankungsteil 12 verbunden werden. Die Haltebereiche 32 der Umrandung 28 bilden dabei die Schiebeführungen.

Des Weiteren ist aus der linken bzw. rechten oberen Schnittansicht erkennbar, dass die Umrandung 28 jeweils als Dichtungsanlagefläche 38, 40 ausgebildet ist, welche mit einem korrespondierenden Dichtungselement 42 bzw. 44 zusammenwirkt. Das vordere Dichtungselement 42 kann dabei beispielsweise an einem oberen Dachquerträger eines Windschutzscheibenrahmens angeordnet sein, mit welchem das als vorderes oberes Dachteil des Klappverdecks ausgebildeten Dachmoduls angrenzend ausgebildet ist.

Das hintere Dachelement 44 kann beispielsweise auf Seiten eines hinteren bzw. unteren Dachteils des Klappverdecks angeordnet sein, welches in einem Eckbereich an das vorliegende Dachmodul angrenzt.

Aus der rechten unteren Schnittdarstellung wird insbesondere erkennbar, in welcher Weise sich das jeweilige Verkleidungsteil 16 bzw. 18 an das Dachbeplankungsteil 12 anschließt. Zunächst ist dabei erkennbar, dass das Verkleidungsteil über zwei Kleberverbindungen 46, 48 mit dem Grundträger 10 verbunden ist. Außerdem ist erkennbar, dass die Umrandung 28 zwischen den jeweiligen Randbereichen 20, 22 und dem zugeordneten Verkleidungsteil 16, 18 angeordnet ist. Das Verkleidungsteil 16 bzw. 18 erstreckt sich dabei etwas höher als die Oberseite 30 des Dachbeplankungsteils 12 bzw. als die Umrandung 28.

Aus der rechten unteren Schnittdarstellung ist des Weiteren erkennbar, dass im Bereich der seitlichen Randbereiche 20, 22 des Dachbeplankungsteils 12 dieses mit dem Grundträger 10 über eine Kleberverbindung 50 bzw. Kleberraupe verbunden ist. Während also entlang des vorderen und hinteren Randbereichs 24, 26 das Dachbeplankungsteil 12 mit dem Grundträger 10 über die Umrandung 28 verbunden ist, geschieht dies entlang der beiden seitlichen Randbereiche 20, 22 über die Kleberverbindung 50.

Das jeweilige Verkleidungsteil 16, 18 umfasst an seinem nach unten bzw. außen weisenden Ende jeweils ein Aufnahmeprofil 52 für ein nicht weiter dargestelltes Dichtungselement. Im vorliegenden Fall dient dieses Dichtungselement zur Abdichtung einer Seitenscheibe einer korrespondierenden Fahrzeugtür gegenüber dem Dachmodul. Insgesamt ist also mit insbesondere Fig. 2 erkennbar, dass mittels der Umrandung 28 eine definierte Außenkontur des Dachmoduls bzw. insbesondere des Dachbeplankungsteils 12 geschaffen werden kann, so dass das Dachmodul mit geringen Gesamttoleranzen versehen ist. Zudem wird es durch die Umrandung 28 besonders einfach, Dachbeplankungsteile 12 je nach Ausstattungsvariante des Personenkraftwagens modular auszutauschen, wobei an den Schnittstellen des Dachmoduls über den angrenzenden Bauteilen geringst mögliche Gesamttoleranzen entstehen. Ein weiterer Vorteil der Umrandung 28 besteht darin, dass weitere Bauteilfunktionen wie Dichtfunktionen, Verkleidungsfunktionen, Haltefunktionen oder dergleichen direkt integriert werden können. Somit kann vorzugsweise die bisher erforderliche Verklebung oder sonstige Fixierung der einzelnen Bauteile entfallen. Alle Bauteile des Dachmoduls werden somit im vorliegenden Fügeprozess gemeinsam verklebt und/oder umspritzt.

## Patentansprüche

1. Dachmodul für ein Fahrzeugdach, insbesondere ein Klappverdeck, eines Personenkraftwagens mit einem Grundträger (10), durch welchen ein Dachbeplankungsteil (12) getragen ist, wobei das Dachbeplankungsteil (12) in Fahrtrichtung des Fahrzeugs einen vorderen Randbereich (24), einen hinteren Randbereich (26) und zwei seitliche, sich in Längsrichtung des Fahrzeugs erstreckende Randbereiche (20, 22) aufweist, wobei sich an die seitlichen Randbereiche (20,22) jeweilige Verkleidungsteile (16, 18) anschließen,
**dadurch gekennzeichnet, dass**
die Randbereiche (20, 22, 24, 26) des Dachbeplankungsteils (12) zumindest über eine Teillänge mit einer Umrandung (28) versehen sind.

2. Dachmodul nach Anspruch 1,
**dadurch gekennzeichnet, dass**
die Umrandung (28) als Kunststoffumspritzung ausgebildet ist.

3. Dachmodul nach Anspruch 1 oder 2,
**dadurch gekennzeichnet, dass**
die Umrandung (28) bzw. Kunststoffumspritzung vollständig um das Dachbeplankungsteil (12) umlaufend ausgebildet ist.

4. Dachmodul nach einem der Ansprüche 1 bis 3,
**dadurch gekennzeichnet, dass**
die Umrandung (28) bzw. Kunststoffumspritzung sich zumindest annähernd bis zur Oberseite (30) des Dachbeplankungsteils (12) erstreckt, und insbesondere flächenbündig mit der Oberseite (28) des Dachbeplankungsteils (12) endet.

5. Dachmodul nach einem der Ansprüche 1 bis 4,
**dadurch gekennzeichnet, dass**
die Umrandung (28) bzw. Kunststoffumspritzung zwischen den Seitlichen Randbereichen (20, 22) und dem zugeordneten seitlichen Verkleidungsteilen (16, 18) verläuft.

6. Dachmodul nach einem der Ansprüche 1 bis 5,
**dadurch gekennzeichnet, dass**
die Umrandung (28) bzw. Kunststoffumspritzung am vorderen und hinteren Randbereich (24, 26) des Dachbeplankungsteils (12) als Dichtungsanlagefläche (38, 40) ausgebildet sind, welche im montierten Zustand mit jeweils korrespondierenden Dichtungselementen (42, 44) zusammen wirken.

7. Dachmodul nach einem der Ansprüche 1 bis 6,
**dadurch gekennzeichnet, dass** die Umrandung (28)
Randbereiche (34, 36) des Grundträgers (10) zumindest über eine Teillänge umrahmt.

8. Dachmodul nach einem der Ansprüche 1 bis 7,
**dadurch gekennzeichnet, dass**
Randbereiche (24, 26) des Dachbeplankungsteils (12) über Klebverbindungen (50) mit dem Grundträger (10) verbunden sind.

9. Dachmodul nach einem der Ansprüche 1 bis 8,
**dadurch gekennzeichnet, dass**
die Verkleidungsteile (16, 18) über Klebverbindungen (46, 48) mit dem Grundträger (10) verbunden sind.

10. Dachmodul nach einem der Ansprüche 1 bis 9,
**dadurch gekennzeichnet, dass**
die Verkleidungsteile (16, 18) mit Aufnahmeprofilen (52) für Dichtungselemente versehen sind.

## Claims

1. Roof module for a vehicle roof, in particular folding top of a passenger car, having a base support (10) supporting a roof cladding element (12), the roof cladding element (12) having - as viewed in the direction of travel - a front edge region (24), a rear edge region (26) and two lateral edge regions (20, 22) extending in the longitudinal direction of the vehicle, wherein the lateral edge regions (20, 22) are adjoined by respective trim parts (16, 18),
**characterised in that**
the edge regions (20, 22, 24, 26) of the roof cladding element (12) are provided with a surround (28) along at least a part of their length.

2. Roof module according to claim 1,
**characterised in that**
the surround (38) is a plastic part applied by injection moulding.

3. Roof module according to claim 1 or 2,
**characterised in that**
the surround (28) or the plastic part applied by injection moulding extends continuously around the roof cladding element (12).

4. Roof module according to any of claims 1 to 3,
**characterised in that**
the surround (28) or the plastic part applied by injection moulding extends at least approximately to the top side (30) of the roof cladding element (12) and is in particular flush with the surface of the top side (30) of the roof cladding element (12).

5. Roof module according to any of claims 1 to 4,
**characterised in that**
the surround (28) or the plastic part applied by injection moulding extends between the lateral edge regions (20, 22) and the associated lateral trim parts (16, 18).

6. Roof module according to any of claims 1 to 5,
**characterised in that**
the surround (28) or the plastic part applied by injection moulding is designed in the front and rear edge regions (24, 26) of the roof cladding element (12) as a seal contact surface (38, 40) acting together with corresponding sealing elements (42, 44) in the assembled state.

7. Roof module according to any of claims 1 to 6,
**characterised in that**
the surround (28) surrounds the edge regions (34, 36) of the base support (10) along at least a part of their length.

8. Roof module according to any of claims 1 to 7,
**characterised in that**
the edge regions (24, 26) of the roof cladding element (12) are joined to the base support (10) by way of adhesive bonds (50).

9. Roof module according to any of claims 1 to 8,
**characterised in that**
the trim parts (16, 18) are joined to the base support (10) by way of adhesive bonds (46, 48).

10. Roof module according to any of claims 1 to 9,
**characterised in that**
the trim parts (16, 18) are provided with mounting profiles (52) for sealing elements.

## Revendications

1. Module de toit pour un toit de véhicule, notamment un toit décapotable d'un véhicule de tourisme comprenant un support de base (10) par le biais duquel est portée une pièce de bordage de toit (12), la pièce de bordage de toit (12) présente dans le sens de la marche du véhicule une zone de bord avant (24), une zone de bord arrière (26) et deux zones de bords latérales (20, 22) qui s'étendent dans le sens longitudinal du véhicule, chacune des pièces d'habillage (16, 18) venant se rattacher aux zones de bord latérales (20, 22), **caractérisé en ce que** les zones de bord (20, 22, 24, 26) de la pièce de bordage de toit (12) sont munies d'une bordure (28) au moins sur une longueur partielle.

2. Module de toit selon la revendication 1, **caractérisé en ce que** la bordure (28) est conçue comme une partie surmoulée en plastique.

3. Module de toit selon la revendication 1 ou la revendication 2, **caractérisé en ce que** la bordure (28) ou la pièce surmoulée en plastique (12) entoure entièrement la pièce de bordage de toit (12).

4. Module de toit selon l'une quelconque des revendications 1 à 3, **caractérisé en ce que** la bordure (28) ou la partie surmoulée en plastique s'étend au moins approximativement jusqu'à la face supérieure de la partie de bordage de toit (12) et en particulier se termine en affleurement avec la face supérieure (28) de la partie de bordage de toit (12).

5. Module de toit selon l'une quelconque des revendications de 1 à 4, **caractérisé en ce que** la bordure (28) ou la partie surmoulée en plastique s'étend entre les zones de bords latérales (20, 22) et les pièces d'habillage (16, 18) latérales correspondantes.

6. Module de toit selon l'une quelconque des revendications 1 à 5, **caractérisé en ce que** la bordure (28) ou la partie surmoulée en plastique est conçue sur la zone de bord avant et arrière (24, 26) de la partie de bordage de toit (12) comme une surface d'appui d'étanchéité (38, 40) laquelle coopère à l'état monté avec chaque élément d'étanchéité correspondant (42, 44).

7. Module de toit selon l'une quelconque des revendications 1 à 6, **caractérisé en ce que** des zones de bord (34, 36) du support de base (10) entoure la bordure (28) au moins sur une longueur partielle.

8. Module de toit selon l'une quelconque des revendications 1 à 7, **caractérisé en ce que** des zones de bord (24, 26) de la pièce de bordage de toit (12) sont reliées au support de base (10) par des assemblages collés (50).

9. Module de toit selon l'une quelconque des revendications 1 à 8, **caractérisé en ce que** les parties d'habillage (16, 18) sont reliées au support de base (10) par des assemblages collés (48).

10. Module de toit selon l'une quelconque des revendications 1 à 9, **caractérisé en ce que** les parties d'habillage (16, 18) sont munies de profilés de réception (52) pour les éléments d'étanchéité.
